(19) Europäisches Patentamt

European Patent Office

Office européen des brevets

(11) **EP 1 059 631 A2**

(12) **EUROPEAN PATENT APPLICATION**

(43) Date of publication:
**13.12.2000 Bulletin 2000/50**

(51) Int. Cl.$^7$: **G11B 7/007**

(21) Application number: **00304820.4**

(22) Date of filing: **07.06.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **09.06.1999 JP 16211099**

(71) Applicant: **SONY CORPORATION Tokyo (JP)**

(72) Inventor: **Kobayashi, Seiji Shinagawa-ku, Tokyo (JP)**

(74) Representative:
**Nicholls, Michael John J.A. KEMP & CO. 14, South Square Gray's Inn London WC1R 5LX (GB)**

(54) **Optical disc apparatus, optical disc reproducing method and optical disc**

(57)    The present invention relates to an optical disc apparatus, an optical disc reproducing method and an optical disc. Thereby, for example, the present invention can be applied an optical disc system in which the desired data can be recorded through meander of the groove in view of surely reproducing the data recorded in higher recording density. The data recorded through the meander at wall surface of groove can be reproduced from change of the polarizing plane of the returning beam obtained through radiation of the laser beam.

FIG. 10

**Description**

The present invention relates to an optical disc apparatus, an optical disc reproducing method and an optical disc which can be adapted to an optical disc system for recording the desired data utilizing, for example, grooves. The present invention reliably realizes reproduction of data recorded in the higher density by reproducing the data recorded using meander at wall surface of groove depending on change of polarizing plane of the returning light beam obtained through radiation of laser beam.

In an optical disc such as a compact disc of the related art, desired data is recorded by sequentially forming the pits or marks with reference to the predetermined standard period.

Namely, in the compact disc manufacturing process, an Error Correcting Code (ECC) is added to an audio data obtained by sampling an audio signal and thereafter a modulated signal can be generated through EFM (Eight to Fourteen Modulation) method. Moreover, in this process, the laser beam is ON-OFF controlled by this modulated signal to expose an original disc and then this original disc is developed to manufacture a mother disc and a compact disc is then manufactured from this mother disc.

Thereby, in this compact disc, the data of 8-bit stream is converted to the data of 17-bit stream by the EFM modulation method and thereafter the data is converted to a serial data stream and the pits or spaces are sequentially formed corresponding to the logical level of this serial data stream.

In an optical disc of this type, desired data is recorded by the binary recording method depending on existence of pits and therefore a method for recording the desired data by a multi-level recording system has newly been proposed against such data recording system explained above.

Namely, the Japanese Published Unexamined Patent Application No. Hei 2-123523 discloses a method of multi-level recording by forming gradient pits to the track, while the Japanese Published Unexamined Patent Application No. HEI 7-21569 proposes a method of multi-level recording by changing the depth and shape of pits in the multiple stages.

These methods, however, conceive the problem that it is difficult to form the high density pit stream due to the inter-symbol interference from the adjacent pits and therefore it becomes difficult to reliably reproduce the data recorded in higher density.

The present invention has been proposed considering the problems explained above and an object of the present invention is to propose an optical disc, an optical disc manufacturing method and an optical disc which can reliably reproduce the data recorded in higher density.

In view of solving the problems explained above, the invention according to one aspect is adapted to an optical disc apparatus or an optical disc reproducing method. Thereby a polarization detecting signal which changes its signal level depending on the polarizing plane of the returning beam is generated on the basis of the receiving result of returning beam obtained through radiation of the laser beam and the data recorded on the optical disc can be reproduced by processing the polarization detecting signal.

Moreover, the invention according to another aspect is adapted to an optical disc. Thereby, the desired data can be detected depending on change of polarizing plane of the returning beam obtained through radiation of the laser beam and also can be recorded utilizing meander at wall surface of grooves.

According to one aspect of the present invention, the data recorded depending on meander at wall surface of groove can be reproduced by generating the polarization detecting signal which changes signal level depending on the polarizing plane of the returning beam on the basis of the receiving result of returning beam obtained through radiation of the laser beam and then reproducing the data recorded on the optical disc by processing the polarization detecting signal. Since the meander at wall surface of groove can be formed depending on various signal waveforms, high recording can be realized through the multiplex or the like of the signal modulated by data. Moreover, influence of inter-symbol interference, which is caused by the pit stream, can effectively be avoided by forming the meander through previous correction considering a beam diameter.

Moreover, according to another aspect of the present invention, since the desired data can be detected depending on change of the polarizing plane of the returning beam obtained through radiation of laser beam and can also be recorded depending on the meander at wall surface of groove, this meander at wall surface of groove can be formed depending on various signal waveforms and high density recording can be realized through the multiplex of signal modulated by the data. In addition, influence of inter-symbol interference, which is observed by the pit stream, can be avoided efficiently by forming the meander through previous correction considering a beam diameter.

Embodiments of the invention will now be described, by way of example only, with reference to the accompanying drawings, in which:

Fig. 1 is a block diagram illustrating an optical disc apparatus for reproducing an optical disc in relation to the preferred embodiment of the present invention.

Fig. 2 is a block diagram illustrating an optical disc apparatus in relation to the preferred embodiment of the present invention.

Figs. 3A and 3B are schematic diagrams illustrating an optical system of the optical disc apparatus of Fig. 2.

Fig. 4 is a block diagram illustrating a modulation circuit applied to the optical disc apparatus of Fig. 2.

Fig. 5 is a block diagram illustrating a level converting circuit of the modulation circuit of Fig. 4.

Fig. 6 is a block diagram illustrating the +45° phase shift circuit of the modulation circuit of Fig. 4.

Fig. 7 is a block diagram illustrating the -45° phase shift circuit of the modulation circuit of Fig. 4.

Fig. 8 is a block diagram illustrating a characteristic correcting circuit of the optical disc apparatus of Fig. 2.

Fig. 9 is a characteristic curve diagram illustrating the input/ output characteristic of the characteristic correcting circuit of Fig. 8.

Fig. 10 is a perspective view illustrating the optical disc manufactured by utilizing an optical disc apparatus of Fig. 2.

Fig. 11 is a schematic diagram illustrating an optical system of optical pickup of the optical disc apparatus of Fig. 1.

Fig. 12 is a schematic diagram for explaining an optical system of optical pickup of Fig. 11.

Fig. 13 is a block diagram illustrating a decoding circuit of the optical disc apparatus of Fig. 1.

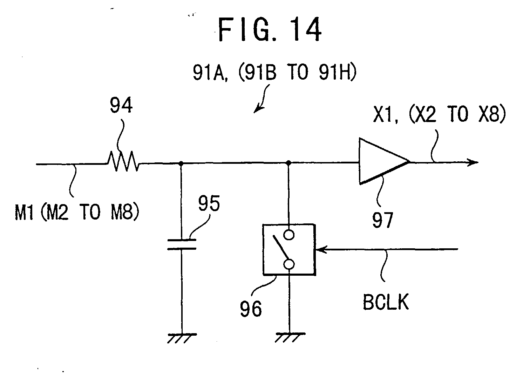

Fig. 14 is a block diagram illustrating an integral circuit of the decoding circuit of Fig. 13.

The preferred embodiments of the present invention will be explained in detail with reference to the accompanying drawings.

(1) First Embodiment

(1-1) Structure of the first embodiment

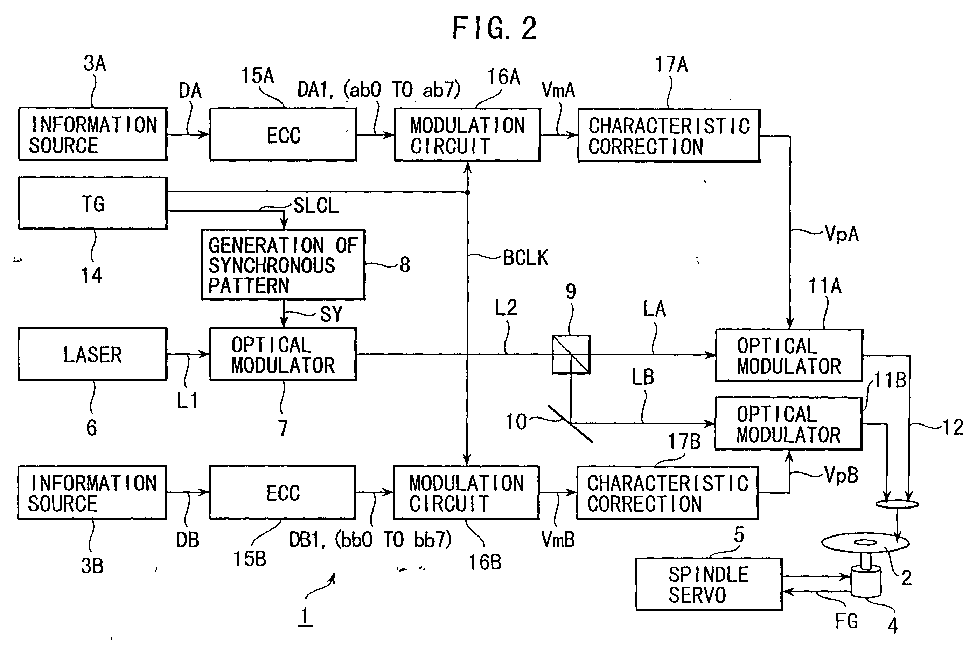

Fig. 2 is a block diagram illustrating an optical disc apparatus regarding the preferred embodiments of the present invention. This optical disc apparatus 1 exposes an original disc 2 to record input data DA and DB output from information sources 3A, 3B. In the process for manufacturing an optical disc, after this original disc 2 is developed, a mother disc is produced with the electroforming process and a stamper is then produced from this mother disc. Moreover, in the process for producing an optical disc, a disc substrate is then manufactured from the stamper produced as explained above and an optical disc is manufactured by forming a reflection film and a protection film on this disc substrate.

Namely, in this optical disc apparatus 1, a spindle motor 4 drives to rotate the original disc 2 and an FG signal generating circuit held at the bottom outputs an FG signal FG which raises its signal level for every predetermined rotating angle. A spindle servo circuit 5 drives the spindle motor 4, depending on the exposing position of the original disc 2, to set the frequency of the FG signal FG to the predetermined frequency. Thereby the spindle motor 4 is driven to rotate depending on the predetermined rotating velocity of the original disc 2.

A laser 6 is composed of a gas laser or the like to emit a laser beam L1 for exposing the original disc. An optical modulator 7 is an AOM (Acoustic Optical Modulator) composed of an electro-acoustic optical element or the like. Therefore, the laser beam L2, which changes amount of light beam depending on a synchronous signal SY output from a synchronous pastern generating circuit 8 is emitted by controlling the laser beam L1 depending on the synchronous signal SY. Therefore, the optical modulator 7 emits the laser beam L1 with insertion of the synchronous pattern thereto.

A beam splitter 9 emits the two optical beams by splitting the laser beam L2 emitted from the optical modulator 7 and a mirror 10 bends the light path of the laser beam LB, among two laser beams LA and LB, reflected with the beam splitter 9 and emits this laser beam in the light path almost parallel to the remaining laser beam LA.

An optical modulator 11A is an AOM formed of an electro- acoustic optical element or the like and emits the laser beam LA by displacing the emitting direction thereof in the direction corresponding to the radius direction of the original disc 2 depending on the modulation signal VpA. Meanwhile, the optical modulator 11B is also an AOM composed of an electro-acous tic optical element or the like and emits the laser beam LB by displacing the emitting direction thereof in the direction corresponding to the radius direction of the original disc 2 depending on the modulation signal VpB.

The laser beams LA, LB obtained as explained above are bent in the optical paths with a mirror not illustrated, emitted toward the original disc 2 and focused thereto with an objective lens 12. These mirror and objective lens 12 are sequentially moved in the external circumference direction of the original disc 2 synchronously with rotation thereof by means of a sled mechanism not illustrated. Thereby, the exposing positions by the laser beams LA and LB are sequentially displaced in the external circumference direction of the original disc 2.

Thereby, in this optical disc apparatus 1, while the original disc 2 is driven to rotate, the spiral groove can be formed through movement of the mirror and objective lens 12.

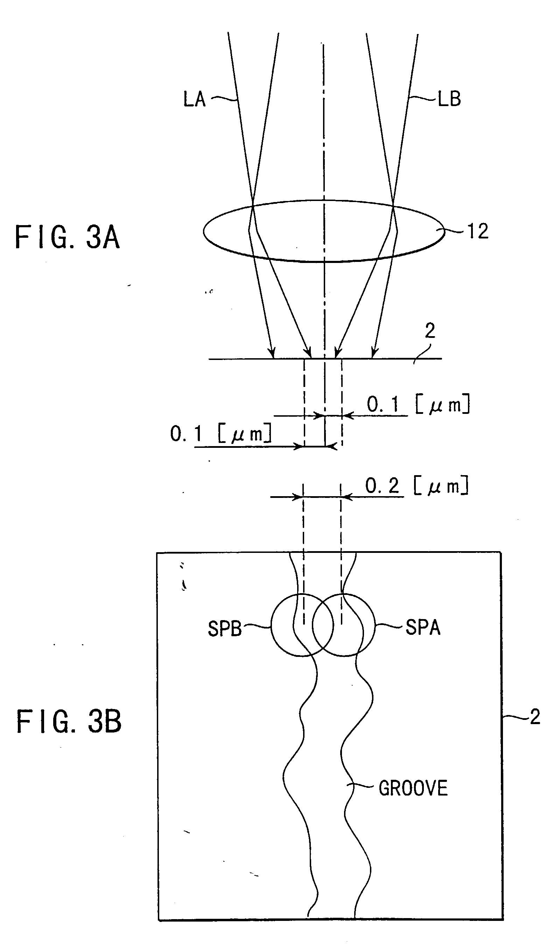

Here, as illustrated in Figs. 3A and 3B, in this optical disc apparatus, the normal of original disc 2 is set to almost match with the optical axis of the objective lens 12 and one laser beam LA is incident with the predetermined gradient against the optical axis of this objective lens 12. Thereby, in this optical disc apparatus 1, the optical axis of the laser beam LA is caused to cross the surface of original disc 2 at the position isolated only by 0.1[μm] from the optical axis of the objective lens 12 at the focusing position of the laser beam LA and this isolating direction is matched with the radius direction of the original disc 2.

On the other hand, in the optical disc apparatus 1, the remaining laser beam LB is incident to the objective lens 12 symmetrically to the laser beam LA for the plane extending in the circumference direction of the original disc 2 passing the optical axis of the objective lens 12. Thereby, the optical axis of the laser beam LB crosses the surface of original disc 2 at the position isolated only by 0.1 [μm] from the optical axis of the objective lens 12 in the opposite side of the laser beam LA. Therefore, in the optical disc apparatus 1, the beam spots of two laser beams LA and LB are formed through partial overlap at the position isolated only by 0.2 [μm] in the radius direction of the original disc 2.

After the two beam spots SA and SB are exposed with partial overlap, the original disc 2 is then developed. In this case, sensitivity of photosensitive agent is set to form a narrow projection corresponding to one groove at the locus of radiation of two beam spots SA and SB. Therefore, in this optical disc apparatus 1, the laser beams LA and LB respectively form the internal wall surface and external wall surface of the groove.

In addition, in this optical disc apparatus 1, the internal circumference side wall surface and external circumference side wall surface of the groove can be meandered independently depending on the modulation signals VpA and VpB to drive the optical modulators 11A and 11B by displacing the emitting direction of the laser beams LA and LB to form the beam spots SA and SB in the radius direction of the original disc 2 with the optical modulators 11A and 11B.

Thereby, in this embodiment, the desired data is recorded by the meander at wall surface of groove with the density higher than that in the case using the pit stream to record only the binary data of 0 or 1.

A timing generator (TG) 14 (Fig. 2) generates and outputs a system clock based on the standard operation of this optical disc apparatus 1. Moreover, the timing generator 14 divides this system clock to generate the clock BCLK for data transfer and timing signal SLCL for insertion of synchronous pattern or the like.

A synchronous pattern generating circuit 8 generates and outputs a synchronous signal SY to record the synchronous pattern on the original disc 2. Here, the synchronous signal SY is composed of synchronous pattern, address information, servo information, etc. which are standardized for reproducing operation and includes at least the reference signal required for generation of the data transfer clock BCLK and the reference signal required for generation of clocks CL1 to CK4 in the reproducing side which will be explained later.

The information sources 3A and 3B sequentially output the data DA and DB with reference to the reference signal output from this timing generator 14. The error correcting code generating circuits (ECC) 15A and 15B respectively receive the data DA and DB, adds thereto an error correcting code (ECC) and thereafter outputs the data through the interleave process. In this case, the error correcting code generating circuits 15A and 15B output the processing results in the timing synchronized to the data transfer clock BCLK as the bit parallel data DA1 (ab0, ab1......, ab7) and DB1 (bb0, bb1......, bb7).

The modulation circuits 16A, 16B generate and output the modulation signals VmA and VmB to be used for modulation of laser beam L1 by processing the output data DA1 (ab0, ab1, ......, ab7) and DB1 (bb0, bb1, ......, bb7) of the error correcting code generating circuits 15A and 15B with reference to the data transfer clock BCLK.

The characteristic correcting circuits 17A and 17B outputs the modulation signals VpA and VpB by correcting the signal level of these modulation signals VmA and VmB in order to compensate non-linear characteristic of the optical modulators 11A and 11B, prevent deterioration of reproduced signal due to the beam diameter in the reproducing side and moreover obtain the characteristic suitable for characteristic of the optical system. In practice, in the reproducing system of this embodiment, the meander of groove is detected from the change of polarizing plane of the returning beam obtained through radiation of laser beam and the characteristic correcting circuits 17A and 17B compensate the modulation signals VmA and VmB to detect the meander of groove as the change of the polarizing plane. Thereby, in this embodiment, the meander, at wall surface of groove can be compensated previously depending on the characteristic of reproducing system.

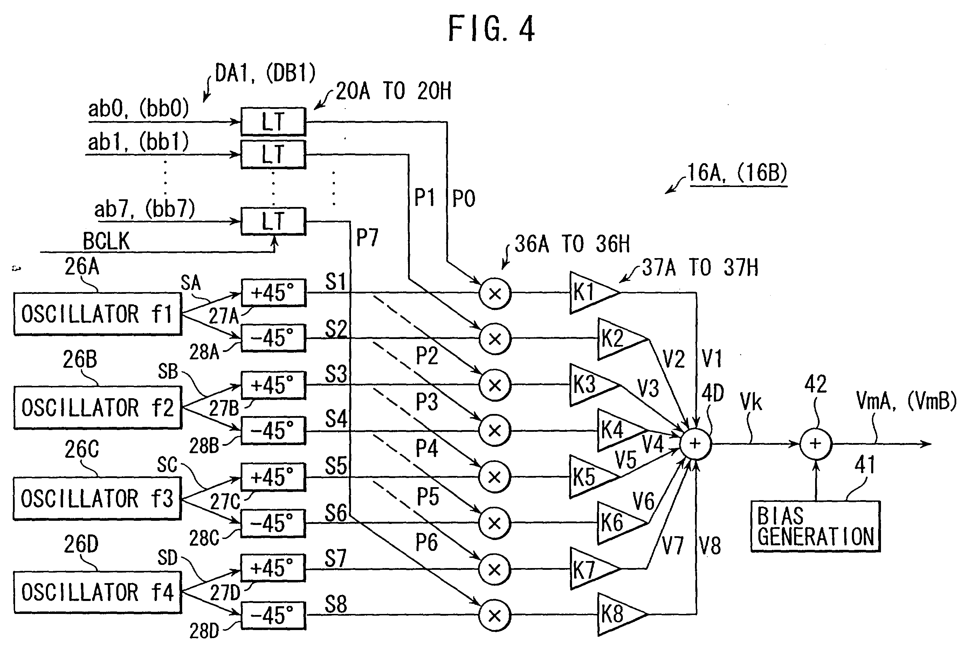

Fig. 4 is a block diagram illustrating a modulation circuit 16A. Here, the modulation circuit 16B has the structure which is identical to that of the modulation circuit 16A, except for difference of processing objects. Therefore, only the modulation circuit 16A is explained and explanation of the modulation circuit 16B is omitted.

In the modulation circuit 16A, level converting circuits (LT) 20A to 20H are formed in the same manner of a D flip-flop, adding circuit and amplitude adjusting circuit, etc. The level converting circuits 20A to 20H receive each bit ab0 to ab7 of the data DA1 and output the data of each bit ab0 to ab7 which rises to the predetermined signal level from 0 level after correcting the data so that the signal level changes around 0 level.

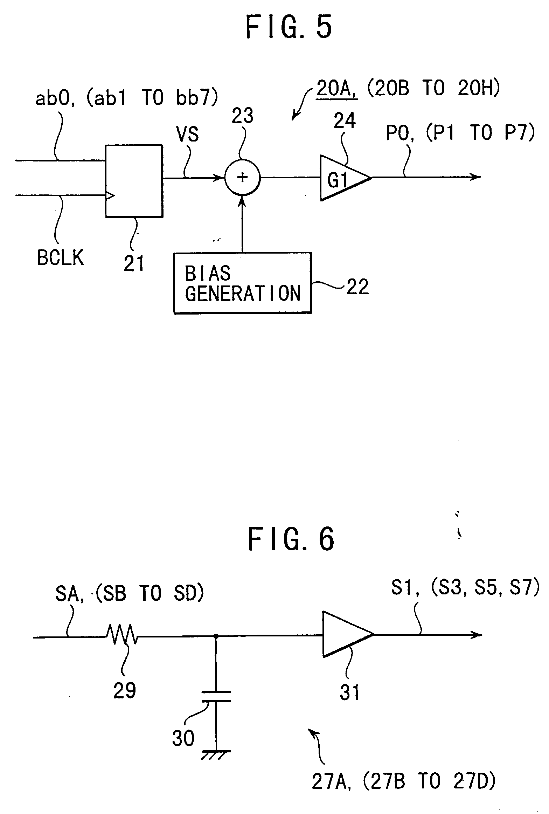

Namely, as illustrated in Fig. 5, the level converting circuits 20A to 20H sequentially latch and hold the continuous data of each bit ab0 to ab7 with reference to the data transfer clock BCLK in the D flip-flop 21. For instance, data of each bit ab0 to ab7 is output from the D flip-flop 21 in the TTL (Transistor Transistor Logic) level and thereby an output terminal voltage VS of this D flip-flop changes in the range from 0 [V] to about +4 [V].

A bias generating circuit 22 generates and outputs a DC voltage for bias with a negative voltage -Vsp/2 which is equal to the half of the amplitude value Vsp of the output terminal voltage VS of this D flip-flop 21. The adding circuit 23 outputs the signal level by correcting such signal level of each bit ab0 to ab7 to change within the range of -2 [V] to 2 [V] around 0 [V] by adding this DC voltage to the data of each bit ab0 to ab7 output from the D flip-flop 21.

An amplifying circuit (G1) 24 corrects the signal level of each bit ab0 to ab7 to change within the range from -1[V] to 1[V] around 0[V] by amplifying and outputting the output data of this adding circuit 23 with the predetermined gain. Thereby, the level converting circuits 20A to 20H output, corresponding to each bit ab0 to ab7 of data DA1, the signals P0 to P7 in the polarity of eight systems of which signal levels change within the range from -1[V] to 1 [V] around 0 [V].

The oscillators 26A to 26D (Fig. 4) output sine-wave signals SA to SD in different frequencies with reference to the data transfer clock BCLK. Here, the first oscillator 26A generates the sine-wave signal SA of the same frequency f1 as the data transfer clock BCLK, while the second oscillator 26B generates the sine-wave signal SB of the frequency f2 which is two times the frequency f1 of the data transfer clock BCLK. The third and fourth oscillators 26C and 26D respectively generate the sine-wave signals SC and SD of the frequencies f3 and f4 which are three and four times the frequency f1 of the data transfer clock BCLK.

The +45° phase shift circuits (+45°) 27A, 27B, 27C and 27D put forward the phases of the sine-wave signals SA to SD output from the oscillators 26A to 26D by 45 degrees and then output these signals. Namely, as illustrated in Fig. 6, the +45° phase shift circuits 27A, 27B, 27C and 27D input the sine-wave signals SA to SD to a low-pass filter consisting of a resistor 29 and a capacitor 30. Here, in the +45° phase shift circuits 27A, 27B, 27C and 27D, the resistance value R29 of resistor 29 and capacitance C30 of capacitor 30 are selected so that following relation can be established respectively for the frequencies f of the sine-wave signals SA to SD. Thereby, the phases of input sine-wave signals SA to SD are put forward by 45 degrees.

$$f = 1/(2\pi \cdot R29 \cdot C30) \tag{1}$$

The amplifying circuit 31 corrects the phases as explained above to compensate the changing signal level by outputting an output signal of this low-pass filter after amplifying it about 3 [dB]. Thereby, the +45° phase shift circuits 27A, 27B, 27C and 27D output respectively the reference signals S1, S3, S5, S7 of constant amplitude based on the sine-wave signals.

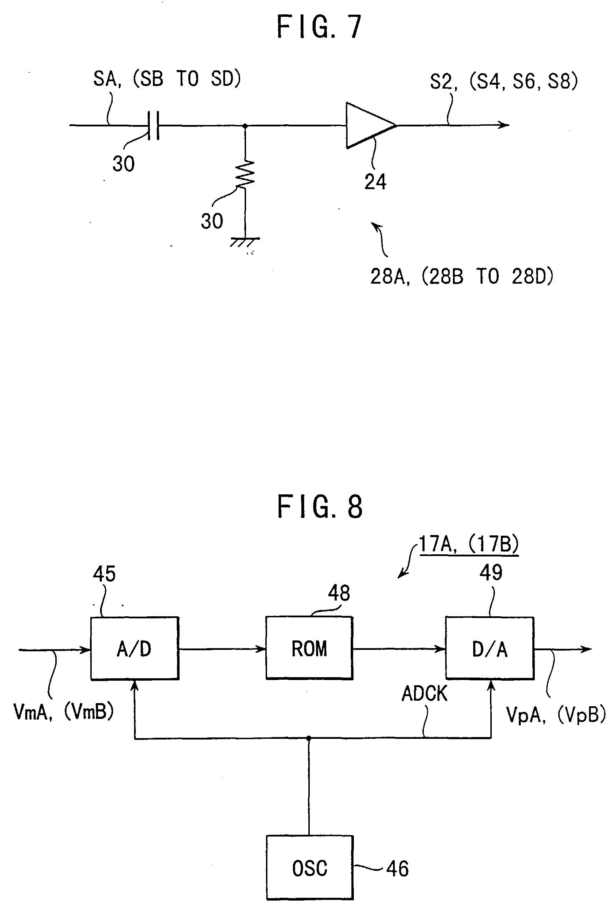

The -45° phase shiftcircuits(-45°) 28A, 28B, 28C and 28D respectively delay the phases of the sine-wave signals SA to SD output from the oscillators 26A to 26D by 45 degrees and then output these signals. Namely, as illustrated in Fig. 7, the -45° phase shift circuits 28A, 28B, 28C and 28D respectively input the sine-wave signals SA to SD to a high-pass filter consisting of a capacitor 33 and a resistor 34. Here, in the -45° phase shift circuits 28A, 28B, 28C and 28D, the capacitance C33 of capacitor 33 and resistance value R34 of resistor 34 are selected to respectively establish following relation for the frequencies f of the sine-wave signals SA to SD and thereby the phases of input sine-wave signals SA to SD are delayed by 45 degrees.

$$f = 1/(2\pi \cdot R34 \cdot C33) \tag{2}$$

The amplifying circuit 35 corrects the phase as explained above by amplifying 3 [dB] the output signal of this high-pass filter in view of correcting the changing signal level. Thereby, -45° phase shift circuits 28A, 28B, 28C and 28D respectively output the reference signals S2, S4, S6, S8 of constant amplitude consisting of cosine-waves.

Therefore, the +45° phase shift circuits 27A, 27B, 27C and 27D and the -45° phase shift circuits 28A, 28B, 28C and 28D are designed to generate a plurality of pairs of orthogonal reference signals S1 to S8 in different frequencies as expressed by the following formulae.

$$S1 = A \cdot \sin (2\pi \cdot f1 \cdot t) \tag{3}$$

$$S2 = A \cdot \cos (2\pi \cdot f1 \cdot t)$$

$$S3 = A \cdot \sin (2\pi \cdot 2 \cdot f1 \cdot t)$$

$$S4 = A \cdot \cos (2\pi \cdot 2 \cdot f1 \cdot t)$$

$$S5 = A \cdot \sin (2\pi \cdot 3 \cdot f1 \cdot t)$$

$$S6 = A \cdot \cos (2\pi \cdot 3 \cdot f1 \cdot t)$$

$$S7 = A \cdot \sin (2\pi \cdot 4 \cdot f1 \cdot t)$$

$$S8 = A \cdot \cos (2\pi \cdot 4 \cdot f1 \cdot t)$$

The multiplying circuits 36A to 36H modulate these reference signals S1 to S8 with corresponding polarity signals P0 to P7 by multiplying these reference signals S1 to S8 with the polarity signals P0 to P7 output from the level converting circuits 20A to 20H and thereafter provide the outputs.

The amplifying circuits 37A to 37H (Fig. 4) amplify the output signals of the multiplying circuits 36A to 36H and then provide the outputs. Thereby, the modulation signals V1 to V8 output from the amplifying circuits 37A to 37H are expressed respectively by the following formulae defining the gains of amplifying circuits 37A to 37H as K1 to K8.

$$V1 = +K1 \cdot A \cdot \sin (2\pi\ f1 \cdot t)......... \text{when ab0 is logic 1} \tag{4}$$

$$V1 = -K1 \cdot A \cdot \sin (2\pi \cdot f1 \cdot t)......... \text{when ab0 is logic 0}$$

$$V2 = +K2 \cdot A \cdot \cos(2\pi\ f1 \cdot t)......... \text{when ab1 is logic 1}$$

$$V2 = -K2 \cdot A \cdot \cos (2\pi\ f1 \cdot t).......\text{when ab1 is logic 0}$$

$$V3 = +K3 \cdot A \cdot \sin (2\pi\ 2f1 \cdot t)........ \text{when ab2 is logic 1}$$

$$V3 = -K \cdot A \cdot \sin (2\pi\ 2f1 \cdot t)......... \text{when ab2 is logic 0}$$

$$V4 = +K4 \cdot A \cdot \cos (2\pi\ 2f1 \cdot t).........\text{when ab3 is logic 1}$$

$$V4 = K4 \cdot A \cdot \cos (2\pi\ 2f1 \cdot t).........\text{when ab3 is logic 0}$$

$$V5 = +K5 \cdot A \cdot \sin (2\pi\ 3f1 \cdot t).........\text{when ab4 is logic 1} \tag{5}$$

$$V5 = -K5 \cdot A \cdot \sin (2\pi\ 3f1 \cdot t).........\text{when ab4 is logic 0}$$

$$V6 = +K6 \cdot A \cdot \cos (2\pi\ 3f1 \cdot t)......... \text{when ab5 is logic 1}$$

$$V6 = -K6 \cdot A \cdot \cos (2\pi\ 3f1 \cdot t)......... \text{when ab5 is logic 0}$$

$$V7 = +K7 \cdot A \cdot \sin (2\pi\ 4f1 \cdot t).......... \text{when ab6 is logic 1}$$

$$V7 = -K7 \cdot A \cdot \sin (2\pi\ 4f1 \cdot t)......... \text{when ab6 is logic 0}$$

$$V8 = +K8 \cdot A \cdot \cos (2\pi\ 4f1 \cdot t)......... \text{when ab7 is logic 1}$$

$$V8 = -K8 \cdot A \cdot \cos (2\pi\ 4f1 \cdot t)......... \text{when ab7 is logic 0}$$

Here, the amplifying circuits 37A to 37H are set to increase the gains K1 to K8 as the frequencies of the modulation signals V1 to V8, which are the amplification object, become high as expressed by the following relation. Thereby the amplitudes of the modulation signals V1 to V8 detected during the reproducing operation through the optical system become almost equal.

Namely, on the occasion of reproducing an optical disc, since the size of optical spot used for reproducing operation is limited, the amplitude of the reproduced signal changes depending on the frequency element and the amplitude of reproduced signal is also reduced as the frequency becomes higher in the optical system used in an ordinary reproducing system. In the amplifying circuits 37A to 37H, the amplification factors K1 to K8 are set as expressed by the following relation depending on the frequencies of the input carrier signals S1 to S8 in view of reducing influence of such frequency characteristic and thereby the frequency characteristic of the recording and reproducing system can be corrected.

$$K1, K2 < K3, K4 < K5, K6 < K7, K8 \tag{6}$$

The adding circuit 40 outputs an adding signal Vk by adding these modulation signals V1 to V8. The bias generating circuit 41 generates and outputs the predetermined bias voltage so that change of signal level of this adding signal Vk becomes identical to the change of signal level suitable for drive of the optical modulator 7. An adding circuit 42 adds a bias voltage output from the bias generating circuit 41 to the adding signal Vk to output the modulation signal VmA (VmB) in order to convert the adding signal Vk which changes signal level around the 0 level to the modulation signal VmA (VmB) which raises the signal level from the 0 level.

Fig. 8 is a block diagram illustrating the characteristic correcting circuits 17A and 17B (Fig. 2). In the characteristic correcting circuits 17A and 17B, an analog/digital converting circuit (A/D) 45 performs the analog/digital conversion process to the modulation signal VmA (VmB) with reference to the clock ADCK output from the oscillator (OSC) 46 and then outputs this modulation signal.

A read-only memory (ROM) 48 outputs a comprised correcting value data using an output of the analog/digital converting circuit as an address and the digital/analog converting circuit (D/A) 49 performs the digital/analog conversion process to an output of the read-only memory 48 and outputs the modulation signal VpA (VpB).

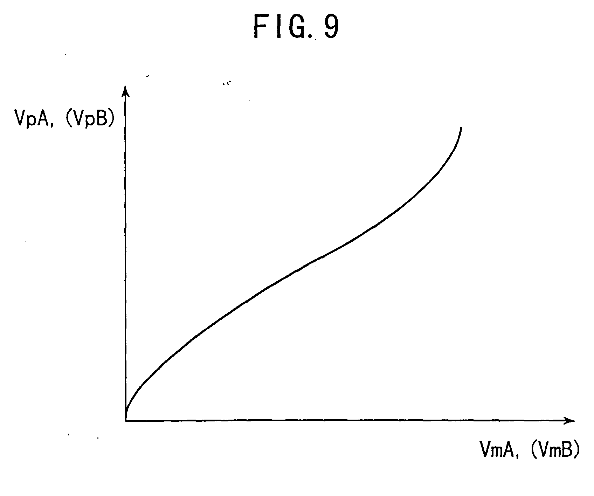

Here, this read-only memory 48 stores the correction value data in order to correct the non-linear characteristic of the optical modulators 11A and 11B, to detect meander of groove from the change of polarizing plane of returning beam and to correct the non-linear characteristic during detection of such polarization. Thereby, the modulation signals VpA and VpB can be output by correcting the signal level of the modulation signals VmA and VmB with the input/output characteristic as illustrated in Fig. 9.

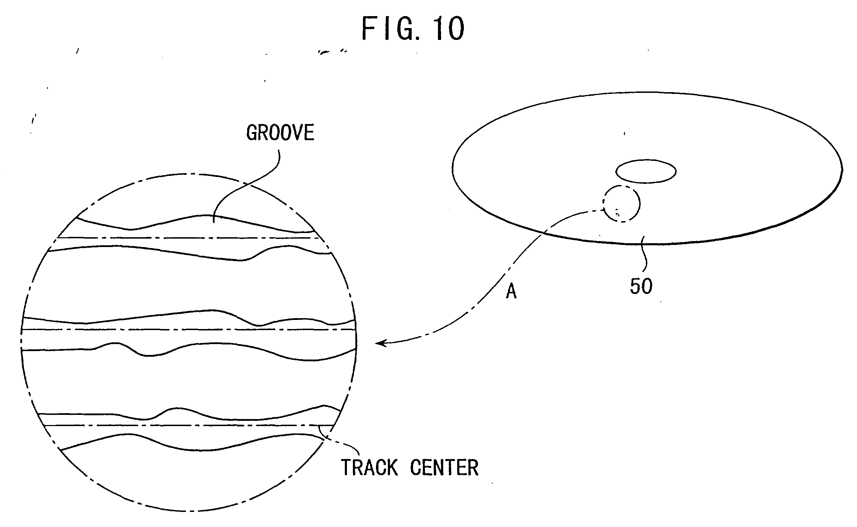

Fig. 10 is a perspective view illustrating an optical disc produced from the original disc 2 exposed by this optical disc apparatus 1. In the original disc 2, the emitting direction of laser beam is modulated with the modulation signals VpA and VpB and moreover the signal level is corrected to generate the modulation signals VpA and VpB after adding the modulation signals V1 to V8 resulting from the reference signals S1 to S8. Thereby, the loci of the internal circumference side wall surface and external circumference side wall surface of the continuous exposing locus are exposed to change depending on the signal levels of the modulation signals VpA and VpB.

Thereby, in the optical disc 50, like the enlarged illustration (A) of Fig. 10, the grooves formed by displacement of the internal circumference wall surface and external circumference wall surface are formed depending on the signal levels of the modulation signals VpA and VpB. Moreover, in such continuous grooves, the synchronous patterns of pits are formed with a constant interval.

In this optical disc producing process, an optical disc can be manufactured in the process that depth of groove and gradient of wall surface of groove for the disc surface, etc. are optimized through selection of photosensitive agent coated on the original disc 2, exposing condition and developing condition, etc. in order to attain efficient change of the polarizing plane of the returning beam with the meander of groove formed as explained above.

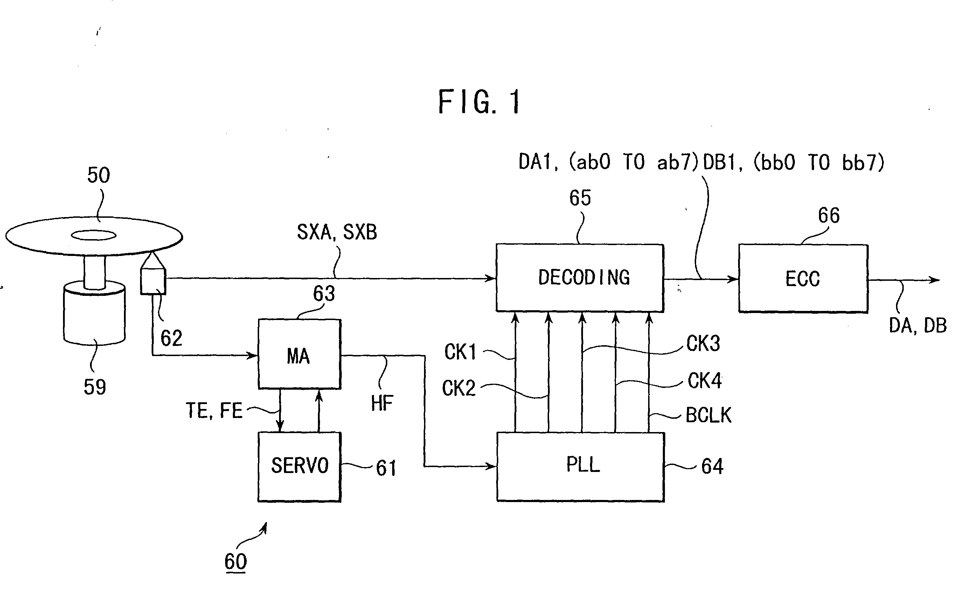

Fig. 1 is a block diagram illustrating an optical disc apparatus to reproduce this optical disc 50. In this optical disc apparatus 60, the spindle motor 59 drives the optical disc 50 to rotate at the predetermined rotating velocity under the control of a servo circuit 61. An optical pickup 62 generates a polarization detecting signal SXA (SXB) of which signal level changes due to the change of the polarizing plane of the returning beam obtained through radiation of laser beam to the optical disc 50. Moreover, the optical pickup 62 outputs the beam receiving result by receiving the returning beam obtained as explained above with the predetermined photo-sensitive element and a subsequent matrix circuit (MA) 63 generates various signals required for tracking control and focus control, etc. from such beam receiving result.

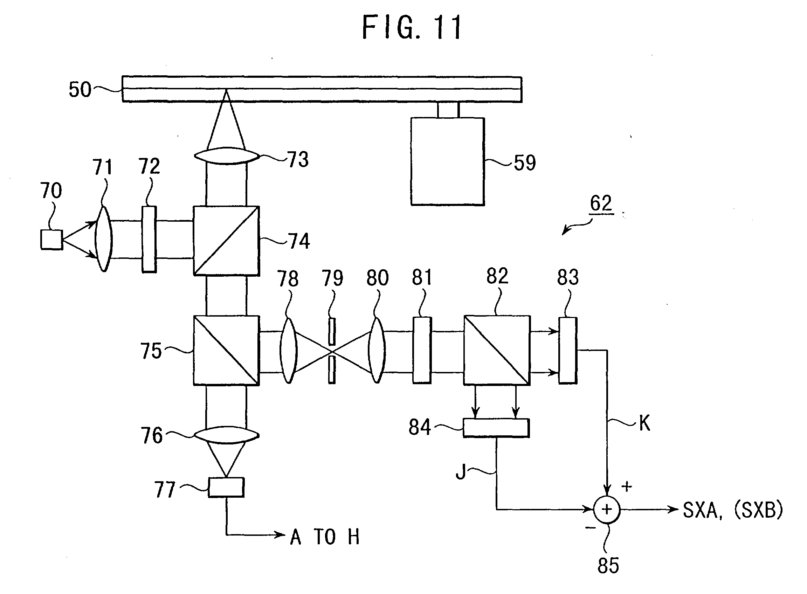

Namely, as illustrated in Fig. 11, a semiconductor laser 70 in the optical pickup 62 emits the laser beam of linear polarization in the constant amount of beam and a subsequent collimator lens 71 converts the laser beam emitted from the semiconductor laser 70 to the parallel light beam. A subsequent grating 72 isolates the laser beam emitted from the collimator lens 71 to the main beam which is the $0^{th}$ order diffraction beam and the side beams which are the $+1^{st}$ order and $-1^{st}$ order diffraction beams and then emits the laser beam including such main beam and side beams to the objective lens 73 through reflection by a beam splitter 74.

The objective lens 73 radiates the optical disc 50 with the laser beam including the main and side beams which is incident from the beam splitter 74 and moreover receives the returning beam from the optical disc 50 resulting from such main and side beams.

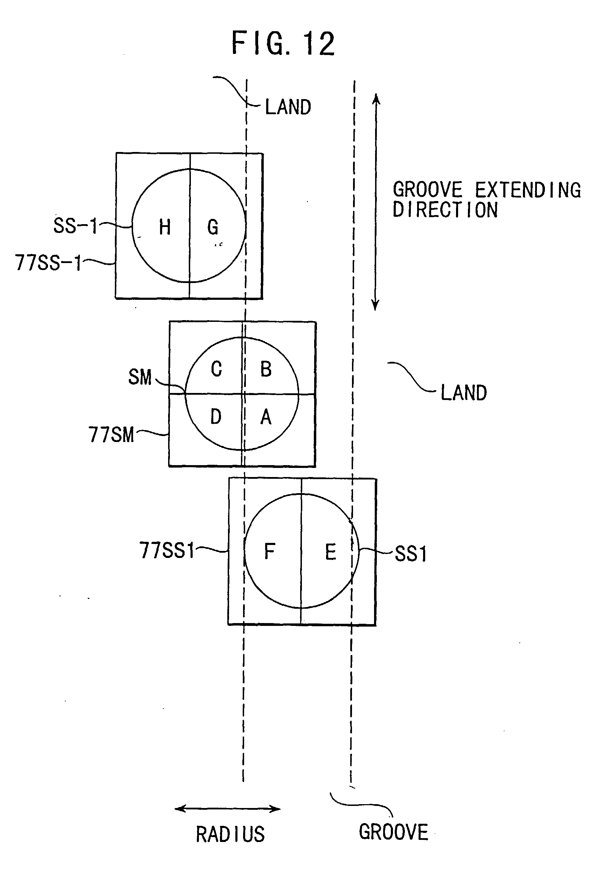

Here, as illustrated in Fig. 12, the optical pickup 62 radiates the laser beam including the main beam and side beams in such a manner that the optical spots (hereinafter called the main spot and side spots) SM, SS1, SS-1 which are formed through radiation of laser beam including main beam and side beams to the optical disc 50 are arranged in the direction in which the groove is extended. Moreover, the optical pickup 62 also radiates the laser beam including the main beam and side beams in such a manner that each side spot SS1, SS-1 is almost in contact with the wall surface of groove at the internal circumference side and external circumference side of the optical disc 50 when the surface wall of groove is radiated with the main spot SM under the just focus condition. Thereby, the tracking control can be realized by the 3-spot method in the optical disc apparatus.

Here, the semiconductor laser 70 is provided to give the angle of 45 degrees to the direction of polarizing plane of the laser beam radiating the optical disc 50 from the objective lens 73 against the groove extending direction of optical disc 50. Therefore, in the optical disc apparatus 60, the laser beam is radiated using the composite beam including the polarizing elements vertical to and parallel to the groove extending direction and thereby the polarizing plane of the returning beam is changed depending on the meander of groove. Accordingly, in the optical disc apparatus 60, the meander of groove can be detected by detecting change of the polarizing plane from the returning beam of the main beam.

The beam splitter 74 (Fig. 11) reflects the main beam and side beams which are incident from the grating 72 and then emits these beams to the objective lens 73, while transmits the returning beam which is incident from the objective lens 73 to isolate the optical path and then emits the beam to a beam splitter 75.

The beam splitter 75 transmits and reflects the returning beam which is incident from the beam splitter 74 to emit this returning beam through isolation into two luminous fluxes.

A condenser lens 76 receives the returning beam having passed the beam splitter 75 and converts such returning beam to the converging luminous flux. The returning beam emitted from the condenser lens 76 is given astigmatism with a cylindrical lens not illustrated.

A detector 77 receives the returning beam including the main beam and side beams emitted from the condenser lens 76. Here, the detector 77 (Fig. 12) receives the returning beam of the main beam with a beam receiving element 77SM of which receiving surface area is divided into four domains of the domains A to D with the dividing line extending in the groove extending direction and radius direction of optical disc. Moreover, the detector 77 also receives the returning beams of the side beams with the beam receiving elements 77SS1 and 77SS-1 of which beam receiving surface are areas are respectively divided into the domains E, F and the domains G, H with the dividing lines extending in the radius direction of optical disc. The detector 77 also outputs the beam receiving result of these domains A to H.

The condenser lens 78 receives the returning beam reflected by the beam splitter 75 and converts this returning beam to the converging luminous flux.

A pin hole 79 is provided at the returning beam condensing position and the returning beam of the main beam at the central area among those of the main beam and side beams selectively passes this pin hole 79. Therefore, in the optical disc apparatus 60, the returning beams of the side beams respectively forming the beam spots at the internal and external circumferences of the wall surface of groove are not used for detection of the polarizing plane in view of improving sensitivity for detection of the meander at wall surface of groove.

The collimator lens 80 converts the returning beam having passed the pin hole 79 to the parallel beam and a phase correcting plate 81 gives the predetermined phase to the returning beam emitted from the collimator lens 80 and thereby corrects change of polarizing plane due to double refraction or the like in the optical disc 50. Thereby, the phase correcting plate 81 can improve detection accuracy of polarizing plane which changes by the meander at wall surface of groove.

A polarization beam splitter 82 receives the returning beam emitted from the phase correcting plate 81 and reflects an element in the polarizing direction which is vertical to the paper surface (s polarizing element) but transmits an element in the polarizing direction which is parallel to the paper surface (p polarizing element). Thereby, the returning beam from the phase correcting plate 81 is isolated into two luminous fluxes of which amount changes complementarily depending on the polarizing plane of the returning beam.

The detectors 83 and 84 receive respectively two luminous fluxes (p polarizing element and s polarizing element) isolated by the polarizing beam splitter 82 and output the beam receiving results K and J of which signal level changes depending on amount of receiving beam. A subtractor 85 receives the beam receiving results K and J of these two detectors 83 and 84 and obtains a difference between these beam receiving results K and J in order to generate and output the polarization detecting signal SXA (SXB) of which signal level changes depending on the polarizing plane of the returning beam.

The optical pickup 62 has two systems of optical structure illustrated in Fig. 11 and thereby can detect simultaneously the polarization detecting signal SXA as the result of detection of the meander at wall surface of the internal circumference side of groove and the polarization detecting signal SXB as the result of detection of the meander at wall surface of the external circumference side of groove.

Accordingly, the matrix circuit (MA) 63 (Fig. 10) is composed of an operational amplifier or the like. The beam receiving results of the domains A to H are processed for the current and voltage conversion with a current/voltage converting circuit not illustrated and thereafter amplified with the predetermined gain in the subsequent amplifying circuit. Moreover, the matrix circuit 63 expresses the current/voltage conversion result obtained from the domains A to H with the corresponding codes and processes these beam receiving results as expressed by the following formula. Thereby, the matrix circuit 63 generates a focus error signal FE, a tracking error signal TE and a reproduced signal HF.

$$HF = A + B + C + D \tag{7}$$

$$FE = A - B + C - D$$

$$TE = (E - F) - (G - H)$$

Accordingly, the tracking error signal TE obtained as explained above becomes 0 level in its signal level when the center of main spot SM is scanning the center of meander at wall surface of groove and when the main spot SM displaces in the internal circumference side and external circumference side from the center of meander, the signal level changes.

Therefore, in the servo circuit 61, the tracking control can be performed to match the center of meander and the center of main beam SM by moving the objective lens 73 of the optical pickup 62 in order to set the signal level of tracking error signal TE to the 0 level. Moreover, the servo circuit 61 moves the objective lens 73 to set the signal level of the focus error signal FE to the 0 level and thereby realizes the focus control.

A PLL circuit 64 selectively processes the reproduced signal HF obtained from the synchronous pattern to generate a data transfer clock BCLK and clocks CK1 to CK4 synchronized with the sine-wave signals SA to SD.

A decoding circuit 65 processes the polarization detecting signal SXA (SXB) with reference to these data transfer clock BCLK and clocks CK1 to CK4 to generate the reproduced data DA1 (ab0 to ab7) which has been recorded depending on the meander at wall surface of internal circumference side through synchronous detection of the polarization detecting signal SXA (SXB) and the reproduced data DB1 (bb0 to bb7) which has been recorded depending on the meander at wall surface of external circumference side.

An error correcting circuit (ECC) 66 performs the interleave process to the reproduced data DA1 (ab0 to ab7) or DB1 (bb0 to bb7), the error correction process based on the error correction code added during the recording operation and then outputs the reproduced data DA or DB obtained as a result to the external apparatus as required.

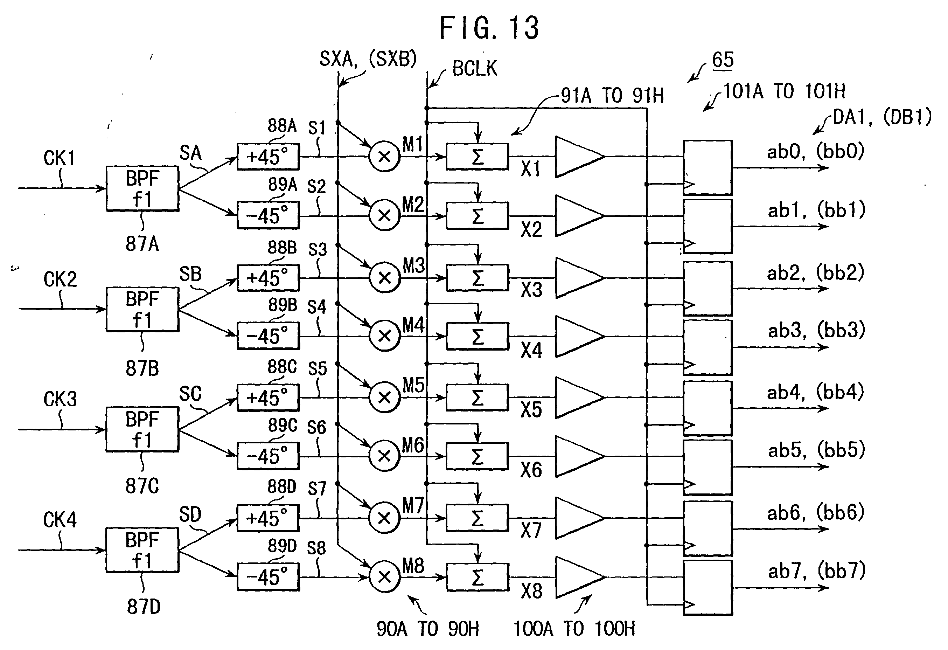

Fig. 13 is a block diagram of the decoding circuit 65. In this decoding circuit 65, the band-pass filters (BPF) 87A to 87D output respectively the clocks CK1 to CK4 with band limitation in order to respectively generate the sine-wave signals SA to SD generated during the recording operation through compression of high frequency harmonics of the clocks CK1 to CK4.

The +45° phase shift circuits (+45°) 88A, 88B, 88C, 88D are respectively structured identical to the +45 phase shift circuits 27A, 27B, 27C, 27D of the optical disc apparatus 1 and thereby output the reference signals S1, S3, S5, S7 which are identical to the sine-wave signals SA to SD putting forward the phases by 45 degrees.

The -45° phase shift circuits (-45°) 89A, 89B, 89C, 89D are respectively structured identical to the -45° phase shift circuits (-45°) 28A, 28B, 28C, 28D of the optical disc apparatus 1 and thereby output the reference signals S2, S4, S6, S8 which are identical to the sine-wave signals SA to SD in the phases delayed by 45 degrees.

Therefore, the +45° phase shift circuits 88A, 88B, 88C, 88D and -45° phase shift circuits 89A, 89B, 89C, 89D generate a plurality pairs of orthogonal reference signals S1 to S8 in different frequencies which are identical to those generated at the time of recording operation.

The multiplying circuit 90A to 90H multiplies the polarization detecting signal SXA (SXB) and each reference signal S1 to S8 and outputs the multiplication result M1 to M8. The integral circuits (Σ) 91A to 91H integrate and output the output signals M1 to M8 of the multiplying circuits 91A to 91H in the period of data transfer clock BCLK.

Namely, as illustrated in Fig. 13, the integral circuits 91A to 91H comprise an integral circuit consisting of a resistor 94 and a capacitor 95 and a switch circuit 96 which clears result of integration by terminating both terminals of a capacitor 95 depending on the data transfer clock BCLK and outputs the result of integration X1 to X8 via the buffer amplifying circuit 97.

Accordingly, in this embodiment, the reference signals S1 to S8 are composed of pairs of orthogonal sine-wave signals in the frequency of integer times and the reference signals S1 to S8 are modulated with the bits ab0 to ab7 changing synchronously with the reference signal S1 of the lowest frequency among these signals and thereafter are added to generate the modulation signal VmA. Thereby, the integration results X1 to X8 obtained by integration with reference to the data transfer clock BCLK change its value depending on the logical level of the corresponding bit ab0 to ab7 but do not change the signal level depending on the logical level of non-corresponding other bits ab0 to ab7.

The comparing circuits 100A to 100H reproduce and output the signal levels of the bits ab0 to ab7 (bb0 to bb7) in the optical disc apparatus 1 by comparing the integration results X1 to X8 with the predetermined threshold value. The D-flip-flop circuits 101A to 101H latch output signals of comparing circuits 100A to 100H with the data transfer clock BCLK and thereby output the reproduced data DA1 (DB1) of the bit ab0 to ab7 (bb0 to bb7).

(1-2) Operation of first embodiment

With the structure explained above, the error correcting code is added to the data DA recorded on the original disc 2 (Fig. 2) in an error correcting code generating circuit 15A for the purpose of interleave process and thereafter the data is then input to a modulation circuit 16A in the 8-bit parallel format. In this modulation circuit 16A, eight data streams by the bit ab0 to ab7 (Fig. 4) are sequentially input in the timing synchronized with the data transfer clock BCLK and thereby the signal levels thereof are corrected to change with reference to 0 level respectively by the level converting circuit 20A to 20H to generate the polarity signals P0 to P7.

In the modulation circuit 16A, since the phases of the sine-wave signals SA to SD output from the oscillators 26A to 26D are respectively corrected by the +45° phase shift circuits 27A, 27B, 27C, 27D and -45° phase shift circuits 28A, 28B, 28C, 28D, a pair of orthogonal reference signals S1 and S2 and pairs of orthogonal reference signals S3 and S4, S5 and S6, S7 and S8 in the frequencies of integer times the frequencies of such a pair of reference signals S1 and S2 are generated by the frequency f1 synchronized with the data transfer clock BCLK. These reference signals S1 to S8 are then multiplied respectively with the polarity signals P0 to P7 in order to generate the modulation signals V1 to V8.

These modulation signals V1 to V8 are amplified with a larger gain when frequency is higher in the amplifying circuits 37A to 37H. Thereby, at the time of reproducing operation, the signal level is corrected corresponding to the frequency characteristic in the recording and reproducing system so that reproduction is conducted almost in the equal amplitude even in any modulation signal V1 to V8.

Thereafter, these modulation signals V1 to V8 are added in the adding circuit 40 and the DC levels of these signals are thereafter corrected with the bias voltage generated in the bias generating circuit 41. Moreover, the signal levels are corrected in the subsequent characteristic correcting circuit 17A (Fig. 8) to correct non-linear characteristic of the optical modulator 11A, to previously correct the characteristic in the reproducing side and to effectively detect the meander of groove with change of the polarizing plane.

In the optical disc apparatus 1, the data DB from the information source 3B is processed for addition of the error correcting code in the error correcting code generating circuit 15B for the interleave process and thereafter this data is input to the modulation circuit 16B in the 8-bit parallel format for generation of the polarity signals P0 to P7. Moreover, in the modulation circuit 16B, these polarity signals P0 to P7 are multiplied, by the frequency f1, respectively with a pair of orthogonal reference signals S1 and S2, and with pairs of orthogonal reference signals S3 and S4, S5 and S6, S7 and S8 in the frequency of integer times the frequency of such a pair of reference signals S1 and S2 in view of generating the modulation signals V1 to V8.

Moreover, after the frequency characteristics of these modulation signals V1 to V8 are corrected, the signal level are then corrected to correct the DC level with the bias voltage generated in the bias generating circuit 41, to correct non-linear characteristic of optical modulator 11B with the subsequent characteristic correcting circuit 17B (Fig. 8) and to effectively detect the meander of groove with change of the polarizing plane.

In the optical disc apparatus 1, the modulation signals VmA and VmB (Fig. 2) of two systems generated as explained above displace the emitting directions of laser beams LA and LB of two systems to which the synchronous patterns are inserted in the radius direction of the original disc 2 within the optical modulators 11A and 11B so that these laser beams of two systems LA and LB radiate the original disc 2 with partial overlap with isolation in the radius direction of the original disc 2 (Figs. 3A and 3B).

Thereby, in the optical disc 50 (Fig. 10) produced through the process of the original disc 2, grooves are generated at the radiation loci of laser beam and the wall surface in the internal circumference side and wall surface in the external circumference side of these grooves are respectively formed to meander depending on the signal level of the modulation signals VpA and VpB.

Thereby, in the optical disc 50 manufactured from the original disc 2, the independent data DA and DB can be recorded to be detectable with change of polarizing plane of the returning beam respectively to the internal and external circumference sides wall surfaces of the groove and therefore it is now possible to record the desired data in the higher density in comparison with the recording of desired data only by utilizing the meander of grooves.

Moreover, the desired data DA and DB are recorded depending on displacement of wall surfaces of grooves and such data DA and DB can be reproduced by detecting changes of the polarizing plane of the returning beam radiating the meander at wall surfaces of grooves. Accordingly, data can be reproduced without considering interference among the pits that can be seen in the recording of data by forming the pit train in the related art. Thereby, the data recorded in the higher density can surely be reproduced.

Moreover, since the meander at wall surfaces of grooves can be formed with various signal waveforms in comparison with the case in which the pit stream is formed to record only the binary data of 0 and 1, high density recording can be realized with the multiplexing of the signals modulated by data.

In this case, the modulation signals VmA and VmB to form the meanders at the wall surfaces of grooves are generated in synchronization with the data transfer clock BCLK and the lowest frequency sine wave signal SA among the signal elements forming the modulation signals VmA and VmB is set identical in the frequency to the data transfer clock BCLK.

Therefore, in the synchronization detection result, which can be obtained by multiplying the polarization detection, signal SXA (SXB) with each reference signal S1 to S7, the logical levels of bits bb0 to ab7, bb0 to bb7 are demodulated. In addition, in the integration result which can be obtained by integrating the multiplication results within the period of the data transfer clock BCLK, the signal level does not change depending on the logical levels of the other bits ab0 to ab7, bb0 to bb7 and the signal levels change only with the logical levels of the corresponding bits ab0 to ab7 and bb0 to bb7.

Therefore, the data streams of eight systems by the bits ab0 to ab7 and bb0 to bb7 are multiplexed with one period of the data transfer clock BCLK and are dispersed to this one period for the recording to the wall surfaces of each groove in the optical disc. On the other hand, in the optical disc of the related art, the one-bit data can sequentially be reproduced in the timing of the edge of pits or marks. Therefore, in this embodiment, influence of momentary noise can be reduced and effective SNR can be as much improved for the reproduced signal obtained from this optical disc 50 and it is now possible to reserve more sufficient margin for high-density recording in comparison with that in the related art.

Meanwhile, in the frequency band of the polarization detecting signal SXA (SXB) obtained by detecting change of wall surfaces of the grooves, the frequency bands for the amplitude modulation of these sine wave- signals SA to SD are combined. Therefore, the frequency of the sine wave signals SA to SD is set avoiding the frequency band in which noise is centralized in the system of this type and thereby effective SNR can be further improved and sufficient margin for high density recording can be as much reserved in comparison with that of the related art.

In addition, high density recording can be realized through effective and efficient use of frequency characteristics of the recording and reproducing system by setting the frequencies of the sine wave signals SA to SD depending not only on the frequency band of noise but also on the frequency characteristic of the recording and reproducing system as a whole.

Moreover, high density recording through effective and efficient use of the frequency characteristic of the recording and reproducing system can also be realized also by recording data with correction of amplitudes of modulation signals V1 to V8 corresponding to the frequency characteristic of such recording and reproducing system.

In this optical disc apparatus 60, the tracking error signal TE can be generated in the 3-spot method by radiating the optical disc 50 (Fig. 1) with the laser beam decomposed to three beams by the diffraction grating and by receiving the returning beams thereof (Fig. 11) and therefore the tracking control is performed with this tracking error signal TE in such a manner as scanning the center of meander at wall surface of internal circumference side of groove or the center of meander at wall surface of external circumference side of groove with the center of the beam spot of the main beam.

Thereby, the main beam is controlled in tracking to enable reproduction of the data DA or DB recorded by the meander at wall surface in the internal circumference side of groove or at wall surface in the external circumference side of groove.

Namely, the returning beam by the main beam among these three beams is isolated to the element in the polarizing direction parallel to the paper surface (p polarizing element) and the element in the polarizing direction vertical to the paper surface (s polarizing element) and the polarization detecting signal SXA (SXB) is generated by a difference of both beam receiving results. Moreover, the reproducing signal HF which changes the signal level depending on the phase of main beam as a whole is detected and the clocks CK1 to CK4 as the generation standards of the sine wave signals SA to SD and the data transfer clock BCLK can be reproduced with the reproduced signal HF to which the synchronous pattern is assigned.

These clocks CK1 to CK4 (Fig. 13) are moreover limited in the frequency band with the band-pass filters 87A to 87D to generate the sine wave signals SA to SD. These sine wave signals SA to SD are then processed in the +45° phase shift circuits 88A to 88D and -45° phase shift circuits 89A to 89D to generate the reference signals S1 to S8.

The polarization detecting signals SXA or SXB is multiplied with the reference signals S1 to S8 respectively in the multiplying circuits 90A to 90H and the multiplication results M1 to M8 are integrated with the period of the data transfer clock BCLK in the integral circuits 91A to 91H. Moreover, the integration results M1 to M8 are respectively converted to the binary data in the comparing circuits 100A to 100H and thereby the original data streams of eight systems ab0 to ab7 can be reproduced. In this case, the noise element mixed into the polarization detecting signal SXA or SXB is smoothed through integration in the integral circuits 91A to 91H and thereby bit error in the reproduced data DA1 (ab0 to ab7), DB1 (bb0 to bb7) can be improved remarkably in comparison with that in the related art.

Moreover, since the low frequency band including considerable noise element of the polarization detecting signal SXA or SXB itself is suppressed and thereby SNR is distinctively improved in comparison with that in the reproduced signal HF by the CA system of the related art, bit error can also be improved thereby remarkably in comparison with the related art.

Since the gain of the amplifying circuit 37A to 37H to amplify the modulation signals V1 to V8 is set, at the time of recording operation, to reproduce the element of modulation signals V1 to V8 of almost uniform signal level in regard to the polarization detecting signal SXA or SXB processed as explained above, deterioration of SNR of the particular modulation signals V1 to V8 can be avoided and thereby the data recorded in the higher recording density can also be reproduced reliably.

The reproduced data DA or DB (Fig. 1) obtained as explained above is processed for error correction in the subsequent error correcting circuit 66 and thereby correct original data can be reproduced. Thereby, on the occasion of adapting, for example, the optical disc apparatus 60 of the present invention to a compact disc player or the like, a music signal can be reproduced from speakers by connecting the DA converter and speakers to an output of the ECC circuit 66.

Moreover, in this case, a user can enjoy two kinds of music programs, for example, by assigning different digital audio signals to the information sources 3A and 3B and then switching the reading object between the wall surface of internal circumference side and the wall surface of external circumference side of groove.

(1-3) Effect of the first embodiment

According to the structure explained above, the polarization detecting signal which changes its signal level depending on the polarizing plane of the returning beam is generated on the basis of the beam receiving result of returning beam and the data recorded on the optical disc can be reproduced by processing such polarization detecting signal and thereby the data recorded in high density depending on the meander at wall surface of groove can surely be reproduced.

Moreover, the polarization detecting signal can easily and surely be generated by receiving the returning beam through decomposition into two luminous fluxes of which polarizing planes are crossing in orthogonal and then detecting a difference signal of the receiving results of these two luminous fluxes to generate the polarization detecting signal.

In addition, a plurality of pairs of orthogonal reference signals for demodulation of different frequencies, which are identical to the reference signal generated at the time of recording the data, are also generated and the data is then reproduced through binary identification of a plurality pairs of multiplied signals obtained by multiplying these pairs of reference signals for demodulation with the polarization detecting signals. Thereby, a plurality of modulation signals are multiplexed to surely reproduce the data recorded in the higher recording density.

Moreover, in the optical disk, since data is recorded based on the meander at wall surface of groove to be detectable with change of polarizing plane of the returning beam, the desired data can be recorded in higher density in such a manner as can surely be reproduced in the reproducing side.

In addition, the desired data can also be recorded in higher density because the internal circumference side wall surface and external circumference side wall surface of groove are meandered independently.

Moreover, since the modulated signals generated by modulating, with the data of eight systems, a plurality of pairs of orthogonal reference signals for demodulation in different frequencies are added and the wall surface of groove is displaced depending on the signal level of the modulated signal obtained as a result. Thereby, the data of eight systems can be multiplexed and can be recorded through dispersion to the length corresponding to one period of these data and the desired data can be recorded in higher recording density by effectively avoiding bit error due to the influence of noise or the like.

Moreover, the desired data can surely be recorded enabling the reproduction by correcting and recording the modulation signals to prevent deterioration of reproduced signal due to the beam diameter in the reproducing side and to provide the characteristic suitable for characteristic of the optical system in the reproducing side.

(2) Other Embodiments

In the above-mentioned embodiment, the data is reduced by synchronously detecting the polarization detecting signal in the reproducing side, but the present invention is not limited thereto and it is also possible to reproduce the data recorded on the optical disc by analyzing the polarization detecting signal through the high speed Fourier transform utilizing a digital signal processor (DSP).

Moreover, in above embodiment, the data transfer clock BCLK is generated in such a manner as it is synchronized with the sine wave signal SA of the lowest frequency. But, the present invention is not limited thereto and the data transfer clock BCLK can beset to various periods as required. Although it may be different depending on the frequency of the other sine wave signal, influence of the modulated signal other than the object signal can be canceled most effectively in the integration circuits 91A to 91H by setting the period of the data transfer clock BCLK to integer times the period of the sine wave signal SA of the lowest frequency.

Moreover, in above embodiment, it is described that the frequencies f2, f3, f4 of the other pairs of orthogonal signals S3 and S4, S5 and S6, S7 and S8 are set to the integer times the frequency f1 of a pair of orthogonal signals S1 and S2 of the lowest frequency but the present invention is not limited thereto. The frequencies may be set to the frequencies other than the integer times, when each bit can be demodulated for practical use without receiving influence of the other modulation signals.

In addition, in above embodiment, the data DA, DB can be reproduced by processing the synchronous detection result obtained from the multiplying circuits 90A to 90H in the integral circuits 91A to 91H, but the present invention is not limited thereto. For example, when the low-pass filters are used in place of the integral circuits 91A to 91H, various structures can also be applied as required.

In above embodiment, the data streams of eight systems ab0 to ab7, bb0 to bb7 are recorded and reproduced in the identical data-transfer rate, but the present invention is not limited thereto. Namely, the data transfer rate of any data stream may be reduced as required. In other words, when data transfer rate is reduced, for example, for the data stream assigned to the low frequency side and high frequency side in which the frequency characteristic is deteriorated, one bit can discretely be recorded as much in the long distance on the optical disc for such data stream and bit error due to noise can further be improved.

Moreover, in above embodiment, any of the reference signals S1 to S8 of four pairs and eight systems is processed through the modulation but the present invention is not limited thereto. For example, one of the reference signals of highest frequency may be assigned to the address information or the like and moreover, it may be recorded as the reference signal for clock generation without any modulation.

Moreover, in the embodiment explained above, a plurality of pairs of orthogonal reference signals S1 to S8 are modulated by a binary signal, but the present invention is not limited thereto and each reference signal may be modulated with a multi-level signal. In this case, the recording density can further be improved.

In addition, in the embodiment explained above, two laser beams are used, but the present invention is not limited thereto and it is enough when the internal circumference side wall surface and external circumference side wall surface of groove are respectively meandered. For example, it is also possible to form the structure that total of three laser are used and the center laser does not perform modulation.

In above embodiment, the data recorded at the internal circumference side wall surface and at the external circumference side wall surface of groove are simultaneously reproduced in parallel in the reproducing side, but the present invention is not limited thereto and selective reproducing operation is also possible.

In addition, in the embodiment explained above, the data is reproduced by processing the polarization detecting signal, but the present invention is not limited thereto. For example, it is also possible that the so-called tangential push-pull signal is generated from the beam receiving results A to D of the returning beam, for example, by main beam and this tangential push-pull signal is added to the polarization detecting signal to reproduce the data. Thereby, the S/N ratio can further be improved and the data can surely be reproduced. The tangential push-pull signal TPP generates the beam receiving results A to D through the arithmetic operation of the following formula in comparison with the formula (7).

$$TPP = A - B - C + D \tag{8}$$

Moreover, in the above-mentioned embodiment, an optical disc in which data is recorded to the internal circumference side wall surface and external circumference side wall surface of groove is reproduced but the present invention is not limited thereto. For example, the present invention can widely be applied to the reproduction of the optical disc in which data is recorded using the meander of the groove.

In the above-mentioned embodiment, an optical disc is manufactured by exposing the original disc but the present invention is not limited thereto. For example, the present invention can also be widely applied to various optical disc systems such as recording of the desired data to a direct read after write type optical disc or the like.

Claims

1. An optical disc apparatus for accessing an optical disc on which desired data is recorded depending on meander of the wall surface of a groove, comprising:

optical means for receiving the returning beam of a laser beam radiated onto said optical disc and outputting a receiving result of said returning beam;
polarization detecting signal generating means for generating, based on said beam receiving result, a polarization detecting signal of which the signal level changes depending on the polarization of said returning beam;
demodulating means for reproducing the data recorded on said optical disc by processing said polarization detecting signal; and
tracking control means for controlling the tracking of said laser beam based on said beam receiving result.

2. An optical disc apparatus as claimed in claim 1, wherein said optical means further comprises:

polarizing optical system for decomposing said returning beam into a first and a second luminous fluxes of which the planes of polarization are orthogonal;
receiving means for receiving said first and second luminous fluxes and outputting a first and a second beam receiving results; and
subtracting means for generating said polarization detecting signal by detecting a difference signal of said first and second beam receiving results.

3. An optical disc apparatus as claimed in claim 1 or 2, wherein said demodulating means reproduces said data from results of product and addition of a plurality of reference signals for demodulation which are in quadrature and said polarization detecting signal.

4. An optical disc apparatus as claimed in claim 3, wherein said plurality of reference signals for demodulation which are in quadrature include a plurality of sine-wave signals at different frequencies and a plurality of cosine-wave signals corresponding to said sine-wave signals.

5. An optical disc apparatus as claimed in any one of claims 1 to 4, wherein said modulating means is a high speed Fourier transform circuit.

6. An optical disc apparatus as claimed in any one of the preceding claims, wherein said demodulating means further comprises:

orthogonal signal generating means for generating a plurality of reference signals for demodulation which are in quadrature;
multiplying means for generating a plurality of multiplied signals by multiplying respectively said polarization detecting signals with a plurality of reference signals for demodulation which are crossing in orthogonal; and signal processing means for demodulating said data by binary identification of a plurality of said multiplied signals.

7. An optical disc apparatus claimed in any one of the preceding claims, wherein said tracking control means further comprises:

tracking error signal generating means for detecting displacement of said laser beam radiating position from the center of meander of said groove to generate a tracking error signal; and
driving means for displacing said laser beam radiating position based on said tracking error signal.

8. An optical disc apparatus claimed in any one of the preceding claims, wherein said optical means separates said laser beam into a main beam and a pair of side beams and radiates said optical disc with said laser beam in order to form an optical spot with a pair of said side beams to the internal and external circumference sides of the optical spot by said main beam and said tracking control means further comprises:

tracking error signal generating means for detecting displacement of said laser beam radiating position from the center of meander of said groove based on the beam receiving result of returning beam of said side beams to generate a tracking error signal; and
driving means for displacing said laser beam radiating position based on said tracking error signal.

9. An optical disc apparatus as claimed in claim 8, wherein said optical means receives the returning beam by a pair of said side beams with a first and a second beam receiving elements of which beam receiving plane is divided in the direction corresponding to the tangent line of the circumference of said optical disc and said tracking error signal generating means generates said tracking error signal by arithmetic operation of the beam receiving results obtained from each beam receiving plane of said first and second beam receiving elements.

10. An optical disc reproducing method for making access to an optical disc on which desired data is recorded depending on meander of the wall surface of a groove, wherein:

a returning beam resulting from irradiating said optical disc with a laser beam is received in order to output the beam receiving result of said returning beam;
a polarization detecting signal, of which the level changes depending on the polarization of said returning beam, is generated on the basis of said beam receiving result;
data recorded on said disc is reproduced by processing said polarization detecting signal; and
tracking of said laer beam is controlled based on said beam receiving result.

11. An optical disc reproducing method as claimed in claim 10, wherein:

said returning beam is decomposed into first and the second luminous fluxes of which the planes of polarization are orthogonal;

the first and second beam receiving results are output by receiving said first and second luminous fluxes; and said polarization detecting signal is generated by detecting a difference signal of said first and second beam receiving results.

**12.** An optical disc reproducing method as claimed in claim 10 or 11, wherein said data is reproduced from the result of arithmetic operations of product and addition between a plurality of reference signals for demodulation which are in quadrature and said polarization detecting signal.

**13.** An optical disc reproducing method as claimed in claim 10, 11 or 12, wherein:

displacement of said laser beam radiating position from the center of meander of said groove is detected based on said beam receiving result to generate a tracking error signal; and
said laser beam radiating position is displaced based on said tracking error signal.

**14.** An optical disc on which concentric or spiral grooves are formed, wherein desired data are recorded depending on meander of the wall surface of said groove so that data can be detected from a change of plane of polarization of the returning beam obtained through radiation of a laser beam onto said disc.

**15.** An optical disc as claimed in claim 14, wherein the meander at wall surface of said groove includes the meander at wall surface in the internal circumference side of said groove and the meander at wall surface in the external circumference side of said groove, independently of each other.

**16.** An optical disc as claimed in claim 15, wherein:

said meander at wall surface in the internal circumference side is formed depending on a first recording signal;
said meander at wall surface in the external circumference side is formed depending on a second recording signal; and
said first and second recording signals change signal level thereof depending on an addition signal of a plurality of sets of modulated signals generated respectively by modulating a plurality of reference signals, which are in quadrature, with the predetermined data stream.

**17.** An optical disc as claimed in claim 16, wherein said plurality of reference signals in quadrature include a plurality of sine-wave signals at different frequencies and a plurality of cosine-wave signals corresponding to said sine-wave signals.

**18.** An optical disc as claimed in claim 17, wherein said plurality of sine-wave signals are set at frequencies equal to integer multiples of the predetermined reference frequency.

**19.** An optical disc as claimed in any one of claims 14 to 18, wherein the meander at wall surface of said groove is compensated depending on at least one characteristic of the reproducing system.

# FIG. 1

DA1, (ab0 TO ab7) DB1, (bb0 TO bb7)

SXA, SXB

DECODING 65

ECC 66

DA, DB

MA 63

SERVO 61

PLL 64

CK1, CK2, CK3, CK4, BCLK

TE, FE    HF

50

59

62

60

EP 1 059 631 A2

# FIG. 2

EP 1 059 631 A2

FIG. 3A

LA                    LB

12

2

0.1 [μm]

0.1 [μm]

0.2 [μm]

FIG. 3B

SPB        SPA

GROOVE

2

# FIG. 4

EP 1 059 631 A2

19

# FIG. 5

ab0, (ab1 TO bb7)          20A, (20B TO 20H)

VS          23          24          P0, (P1 TO P7)

21          +          G1

BCLK

BIAS
GENERATION          22

# FIG. 6

SA, (SB TO SD)          S1, (S3, S5, S7)

29          31

30

27A, (27B TO 27D)

# F I G. 7

SA, (SB TO SD)                    S2, (S4, S6, S8)

30

30

24

28A, (28B TO 28D)

# F I G. 8

17A, (17B)

45                    48                    49

| A/D | → | ROM | → | D/A |

VmA, (VmB)          ADCK          VpA, (VpB)

OSC          46

# FIG. 9

# FIG. 10

GROOVE

A

50

TRACK CENTER

# FIG. 11

A TO H

SXA, (SXB)

EP 1 059 631 A2

# FIG. 12

LAND

GROOVE EXTENDING
DIRECTION

SS-1

77SS-1

| H | G |

SM

| C | B |
| D | A |

77SM

LAND

77SS1

| F | E |

SS1

RADIUS

GROOVE

# FIG. 13

SXA, (SXB) BCLK  65, 101A TO 101H

91A TO 91H  DA1, (DB1)

CK1 → BPF f1 (87A) → SA

88A → +45° → S1 → ⊗ M1 → Σ → X1 → ▷ → ab0, (bb0)
89A → -45° → S2 → ⊗ M2 → Σ → X2 → ▷ → ab1, (bb1)

CK2 → BPF f1 (87B) → SB

88B → +45° → S3 → ⊗ M3 → Σ → X3 → ▷ → ab2, (bb2)
89B → -45° → S4 → ⊗ M4 → Σ → X4 → ▷ → ab3, (bb3)

CK3 → BPF f1 (87C) → SC

88C → +45° → S5 → ⊗ M5 → Σ → X5 → ▷ → ab4, (bb4)
89C → -45° → S6 → ⊗ M6 → Σ → X6 → ▷ → ab5, (bb5)

CK4 → BPF f1 (87D) → SD

88D → +45° → S7 → ⊗ M7 → Σ → X7 → ▷ → ab6, (bb6)
89D → -45° → S8 → ⊗ M8 → Σ → X8 → ▷ → ab7, (bb7)

90A TO 90H  100A TO 100H

EP 1 059 631 A2

# FIG. 14

91A, (91B TO 91H)

94

X1, (X2 TO X8)

M1 (M2 TO M8)    95

97

96

BCLK